# EUROPEAN PATENT APPLICATION

(11) **EP 4 683 231 A1**
(43) Date of publication of application: **21.01.2026**
(21) Application number: 24840068.1
(22) Date of filing: 09.07.2024
(51) Int. Cl.: H04B 1/3883, H01M 50/247, H01M 10/54

(54) **ELECTRONIC DEVICE**

(30) Priority: 10.07.2023 KR 20230089139
(71) Applicant: LG Energy Solution, Ltd., Seoul 07335 (KR)
(72) Inventor: JUNG, Dae Ho, Daejeon 34122 (KR); JANG, Ji Uk, Daejeon 34122 (KR)
(74) Representative: Plasseraud IP
(86) International application number: PCT/KR2024/009787
(87) International publication number: WO 2025/014258

(57) **Abstract**

The present disclosure relates to an electronic device, and provides the electronic device including a body portion in which a receiving portion having an indented shape is formed; a secondary battery accommodated in the receiving portion; and an insert unit that is at least partially bonded to the secondary battery and is provided to separate the secondary battery from the receiving portion as it is deformed, wherein the insert unit includes a manipulation portion; and a deformation portion connected to the manipulation portion and provided to be deformed by manipulation of the manipulation portion.

## Description

### TECHNICAL FIELD

### CROSS-REFERENCE TO RELATED APPLICATIONS

The present application claims priority to Korean Patent Application No. 10-2023-0089139 filed on July 10, 2023 in the Republic of Korea, the disclosures of which are incorporated herein by reference.

### TECHNICAL FIELD

The present disclosure relates to an electronic device, and more specifically, to an electronic device in which an accommodated secondary battery may be separated without damage.

### BACKGROUND ART

A secondary battery is highly applicable to a variety of product groups and has electrical characteristics with high energy density. Such a secondary battery is applied not only to portable electronic devices but also to electric vehicles, hybrid electric vehicles, power storage devices, or the like driven by electric power sources. The secondary battery is attracting attention as a new energy source to improve eco-friendliness and energy efficiency in that it has not only a primary advantage of dramatically reducing the use of fossil fuels, but also no by-products generated from the use of energy. A secondary battery pack applied to electric vehicles or the like has a structure in which multiple secondary battery modules including a plurality of secondary batteries are connected to obtain high power output.

Recently, research is being actively conducted to protect the environment and recycle resources, such as reducing carbon dioxide emissions, by recycling or reusing secondary batteries that have been used in electronic devices and are nearing the end of their lifespan. A thriving secondary battery recycling or reuse industry may reduce dependence on countries with secondary battery resources and have a positive impact on the virtuous cycle of the secondary battery supply chain.

However, in order to recycle or reuse the secondary battery, a technology for separating the secondary battery from the electronic device without damage is required, and when a structure is inserted into the gap between the electronic device and one side of the secondary battery to separate the secondary battery from the electronic device and a force is applied, the force is concentrated on one side or the other side of the secondary battery, causing damage to the secondary battery, such as bending or warping the secondary battery, which makes it difficult to recycle or reuse the secondary battery. Accordingly, there is a need to develop a technology to solve the above problem.

### SUMMARY

### TECHNICAL PROBLEM

The present disclosure is designed to solve the above problem, and therefore the present disclosure is directed to providing an electronic device in which a secondary battery accommodated therein may be separated without damage so as to be reused.

### TECHNICAL SOLUTION

As an embodiment of the present disclosure, the present disclosure provides an electronic device including a body portion in which a receiving portion having an indented shape is formed; a secondary battery accommodated in the receiving portion; and an insert unit that is at least partially bonded to the secondary battery and is provided to separate the secondary battery from the receiving portion as it is deformed, wherein the insert unit includes a manipulation portion; and a deformation portion connected to the manipulation portion and provided to be deformed by manipulation of the manipulation portion.

Additionally, the manipulation portion may be formed to be bent at a predetermined angle with respect to the deformation portion at an end of the deformation portion, and may extend along the thickness direction of the secondary battery on one side of the secondary battery.

Additionally, one end of the manipulation portion is manipulated to move away from the secondary battery, so that the other end thereof connected to the deformation portion may be provided to apply a force in a direction of compressing the deformation portion.

Additionally, the deformation portion may include a bonded portion bonded to one surface of the secondary battery; and a non-bonded portion that extends from the bonded portion and is not bonded to the secondary battery, wherein the non-bonded portion may be deformed in shape by manipulation of the manipulation portion and may be provided to push the secondary battery out.

Additionally, the non-bonded portion may be deformed into a convex shape toward the secondary battery by manipulation of the manipulation portion and may be provided to push the secondary battery out.

Additionally, the manipulation portion may have stronger rigidity than the deformation portion.

Additionally, the deformation portion may include an elastically deformable material.

Additionally, the deformation portion may be formed to extend from the manipulation portion, and may be disposed along the length direction or width direction of the secondary battery.

Additionally, an insert groove may be formed in one direction on one surface of the secondary battery, and the deformation portion may be inserted into the insert groove.

Additionally, the secondary battery may include a first electrode assembly formed in a first area and having at least one of a first positive electrode, a first negative electrode, and a first separator stacked; a second electrode assembly stacked on the first electrode assembly in a second area smaller than the first area so that the insert groove is formed, and having at least one of a second positive electrode, a second negative electrode, and a second separator stacked; and a case accommodating the first electrode assembly and the second electrode assembly.

Additionally, the secondary battery may further include a third electrode assembly disposed being spaced apart from the second electrode assembly by a predetermined distance on the first electrode assembly so that the insert groove is formed, stacked in a third area smaller than the first area, and having at least one of a third positive electrode, a third negative electrode, and a third separator stacked.

As another embodiment of the present disclosure, the present disclosure provides an electronic device including a secondary battery; a body portion in which a receiving portion having an indented shape is formed to accommodate the secondary battery; and an insert unit mounted on the receiving portion and provided to separate the secondary battery from the receiving portion as it is deformed, wherein the insert unit includes a manipulation portion; and a deformation portion connected to the manipulation portion and provided to be deformed according to manipulation of the manipulation portion.

Additionally, the deformation portion may include a fixed portion fixed to one side of the receiving portion; and a non-fixed portion that is deformed according to manipulation of the manipulation portion and is provided to push the secondary battery out from the receiving portion.

Additionally, the non-fixed portion may be deformed into a convex shape toward the secondary battery by manipulation of the manipulation portion and may be provided to push the secondary battery out.

Additionally, the manipulation portion may be formed to be bent at a predetermined angle with respect to the non-fixed portion from an end of the non-fixed portion, and may extend along the depth direction of the receiving portion.

### ADVANTAGEOUS EFFECTS

The electronic device of the present disclosure may allow a user to easily separate the secondary battery accommodated therein, and may minimize damage to the secondary battery during the process of separating the secondary battery, thereby improving the possibility of recycling or reuse of the separated secondary battery.

### BRIEF DESCRIPTION OF THE DRAWINGS

FIG. 1 is an exploded perspective view showing an electronic device according to Embodiment 1 of the present disclosure.
FIG. 2 is a perspective view showing an insert unit inserted into a secondary battery according to Embodiment 1 of the present disclosure.
FIG. 3 is a cross-sectional view showing a state before a secondary battery accommodated in a receiving portion is separated by an insert unit according to Embodiment 1 of the present disclosure.
FIG. 4 is a cross-sectional view showing a state after a secondary battery accommodated in a receiving portion is separated by an insert unit according to Embodiment 1 of the present disclosure.
FIG. 5 is a cross-sectional view showing a state before a secondary battery accommodated in a receiving portion is separated by an insert unit according to Embodiment 2 of the present disclosure.
FIG. 6 is a cross-sectional view showing a state after a secondary battery accommodated in a receiving portion is separated by an insert unit according to Embodiment 2 of the present disclosure.
FIG. 7 is an exploded perspective view showing an electronic device according to Embodiment 3 of the present disclosure.
FIG. 8 is a cross-sectional view showing a state before a secondary battery accommodated in a receiving portion is separated by an insert unit according to Embodiment 3 of the present disclosure.
FIG. 9 is a cross-sectional view showing a state after a secondary battery accommodated in a receiving portion is separated by an insert unit according to Embodiment 3 of the present disclosure.

### DETAILED DESCRIPTION

Hereinafter, preferred embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Embodiment 1

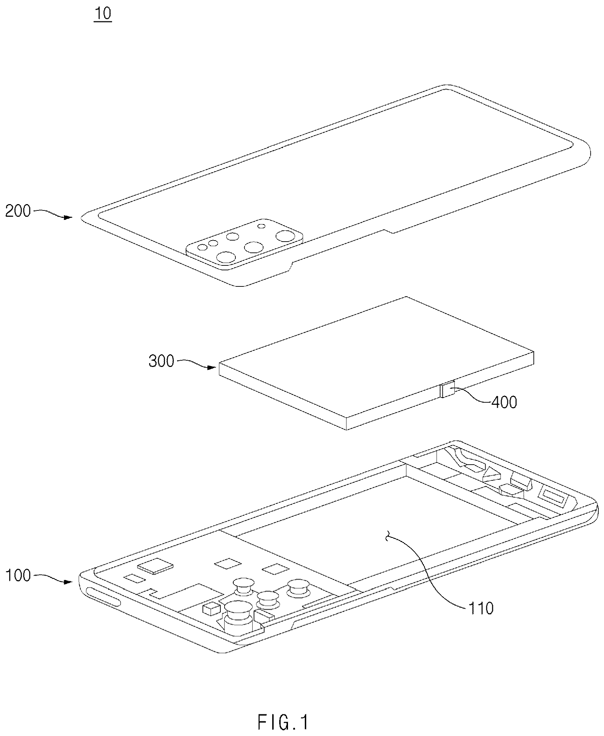

Referring to FIG. 1, as Embodiment 1 of the present disclosure, the electronic device 10 may include a body portion 100, a secondary battery 300, and an insert unit 400.

The electronic device 10 may refer to a device that is electrically driven using the secondary battery 300 as an energy source. The electronic device 10 may be, for example, a portable terminal, a laptop, or the like, but is not limited thereto.

The body portion 100 may include electronic components required for the electronic device to be electrically driven therein, and in the body portion 100, a receiving portion 110 having an indented shape may be formed to accommodate the secondary battery 300, which is the energy source for driving the electronic components.

The receiving portion 110 may accommodate the secondary battery 300 so that the electronic components included in the body portion 100 and the secondary battery 300 may be electrically connected. The secondary battery 300 may be inserted into the receiving portion 110 so that its flat surface faces the inner bottom surface of the receiving portion 110. The secondary battery 300 may be electrically connected to the electronic components included in the body portion 100 by being inserted into the receiving portion 110, and may supply electrical energy.

The depth at which the receiving portion 110 is indented into the body portion 100 may be formed to be lower than the thickness of the secondary battery 300. Since the thickness of the secondary battery 300 accommodated in the receiving portion 110 is greater than the depth of the receiving portion 110, one surface thereof may protrude from the receiving portion 110.

The electronic device 10 may further include a cover 200.

The cover 200 may cover one surface of the body portion 100 so that the secondary battery 300 is not exposed to the outside of the electronic device 10 and may be coupled to the body portion 100.

The cover 200 may be formed to be indented to a predetermined depth so as to accommodate the thickness of the secondary battery 300 protruding from the receiving portion 110.

The secondary battery 300 may include a first electrode assembly (not shown), a second electrode assembly (not shown), and a case (not shown).

The first electrode assembly is formed in a first area and may be formed such that at least one of a first positive electrode, a first negative electrode, and a first separator is stacked.

The first electrode assembly may be, but is not limited to, for example, a stack type electrode assembly formed by stacking the first positive electrode and the first negative electrode and stacking a separator between the first positive electrode and the first negative electrode, a stack-and-folding type electrode assembly in which the first positive electrode and the first negative electrode are alternately stacked by winding the electrode unit using a rectangular separator having a longer length in the horizontal direction than in the vertical direction, and a jelly roll type electrode assembly in which the first negative electrode, the first positive electrode, and a separator interposed between the first negative electrode and the first positive electrode are wound in one direction.

The second electrode assembly is formed in a second area smaller than the first area and may be formed such that at least one of a second positive electrode, a second negative electrode, and a second separator is stacked.

The second electrode assembly may be, but is not limited to, for example, a stack type electrode assembly formed by stacking the second positive electrode and the second negative electrode and stacking a separator between the second positive electrode and the second negative electrode, a stack-and-folding type electrode assembly in which the second positive electrode and the second negative electrode are alternately stacked by winding the electrode unit using a rectangular separator having a longer length in the horizontal direction than in the vertical direction, and a jelly roll type electrode assembly in which the second negative electrode, the second positive electrode, and a separator interposed between the second negative electrode and the second positive electrode are wound in one direction.

Since the second electrode assembly is formed in a second area smaller than the first area and is disposed to be stacked on the first electrode assembly, a step may be formed between the first electrode assembly and the second electrode assembly.

The shape of the second electrode assembly is not limited to, but may be formed to include, for example, a rectangular shape, a bent shape, a shape with a groove indented from one side, and the like, and may be preferably formed in a rectangular shape for a simple manufacturing process.

The secondary battery 300 may further include a third electrode assembly.

The third electrode assembly is formed in a third area and may be formed such that at least one of a third positive electrode, a third negative electrode, and a third separator is stacked.

The third electrode assembly may be, but is not limited to, for example, a stack type electrode assembly formed by stacking the third positive electrode and the third negative electrode and stacking a separator between the third positive electrode and the third negative electrode, a stack-and-folding type electrode assembly in which the third positive electrode and the third negative electrode are alternately stacked by winding the electrode unit using a rectangular separator having a longer length in the horizontal direction than in the vertical direction, and a jelly roll type electrode assembly in which the third negative electrode, the third positive electrode, and a separator interposed between the third negative electrode and the third positive electrode are wound in one direction.

Since the third electrode assembly is formed in a third area smaller than the first area and is disposed to be stacked on the first electrode assembly, a step may be formed between the first electrode assembly and the third electrode assembly.

The shape of the third electrode assembly is not limited to, but may be formed to include, for example, a rectangular shape, a bent shape, a shape with a groove indented from one side, and the like, and may be preferably formed in a rectangular shape for a simple manufacturing process.

The third electrode assembly may be disposed being spaced apart from the second electrode assembly by a predetermined distance on the first electrode assembly, and between the third electrode assembly and the second electrode assembly, a groove formed to have a depth equal to the thickness of the second electrode assembly and the third electrode assembly may be formed along the surface facing the third electrode assembly and the second electrode assembly due to the step formed by stacking the third electrode assembly and the second electrode assembly on the first electrode assembly. The groove is formed such that the case corresponds to the shape of the groove when the first electrode assembly, the second electrode assembly, and the third electrode assembly are accommodated in the case, and an insert groove 310 may be formed on the outer surface of the case.

The case forms the outer surface of the secondary battery and may accommodate the first electrode assembly and the second electrode assembly therein. Additionally, the case may accommodate the first electrode assembly, the second electrode assembly, and the third electrode assembly.

The case may be formed of a flexible pouch sheet material including a metal layer and an insulating layer.

The case may be formed in a shape corresponding to or similar to the stacked shape of the electrode assemblies accommodated therein.

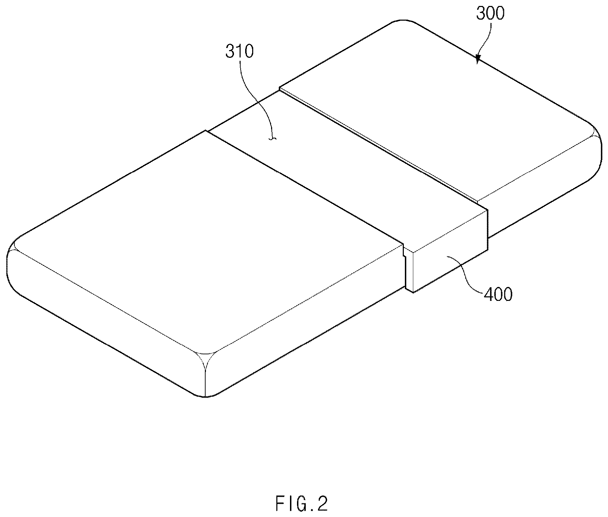

Referring to FIG. 2, an insert groove 310 indented to a predetermined depth along one direction from an edge of one end may be formed on the outer surface of the secondary battery 300.

The insert groove 310 may be formed along the width direction or length direction of the secondary battery 300.

The insert groove 310 may be formed on the outer surface of the case by being formed to surround the step formed by the first electrode assembly and the second electrode assembly and the third electrode assembly stacked on the first electrode assembly so that the case corresponds to the step.

The secondary battery 300 is accommodated so that the insert groove 310 faces the bottom surface of the receiving portion 110, and thus the bottom surface of the insert groove 310 may be spaced apart from the bottom surface of the receiving portion 110 by the depth of the insert groove 310. The insert unit 400 may be inserted into the insert groove 310.

Referring to FIG. 2, the insert unit 400 is configured to separate the secondary battery 300 inserted into the receiving portion 110 of the body portion 100 from the receiving portion 110, which may be configured to prevent damage when the secondary battery 300 is separated from the receiving portion 110.

The insert unit 400 may include a manipulation portion 410 and a deformation portion 420.

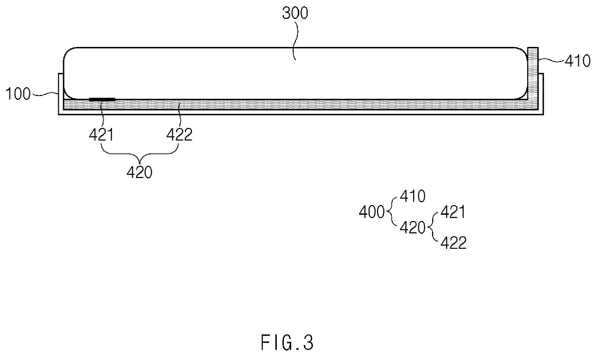

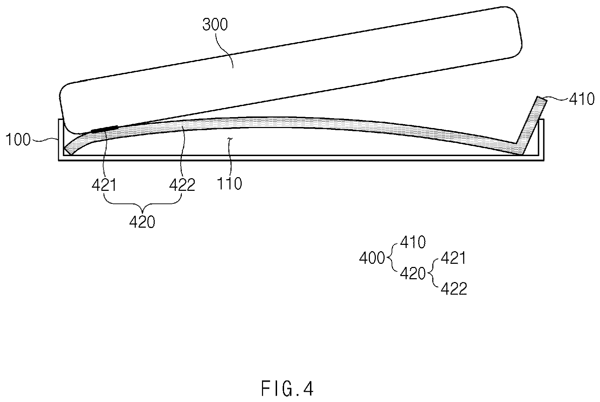

Referring to FIGS. 2 to 4, the insert unit 400 may include a bent shape. The manipulation portion 410 may be formed to be bent at a predetermined angle with respect to the deformation portion 420 at an end of the deformation portion 420. Since the manipulation portion 410 is formed to be bent at a predetermined angle with respect to the deformation portion 420, one end of the manipulation portion 410 is manipulated to move away from the secondary battery 300, so that the other end of the manipulation portion 410 connected to the deformation portion 420 may apply a force in a direction of compressing the deformation portion 420, and the deformation portion 420 subjected to the force may be deformed in shape by the manipulation portion 410.

The manipulation portion 410 may be formed to extend from the deformation portion 420 along the thickness direction of the secondary battery 300 on one side of the secondary battery 300. Since the length of the manipulation portion 410 is formed to be longer than the depth of the receiving portion 110, the manipulation portion 410 may be formed to protrude from the receiving portion 110. The manipulation portion 410 protruding from the receiving portion 110 may be gripped and manipulated by a user.

The manipulation portion 410 may be formed of a rigid material so that its shape is not deformed even when the user grips and manipulates it. The manipulation portion 410 may contact the inner wall edge of the receiving portion 110 when the user manipulates one end thereof to move away from the secondary battery 300, and the length of the manipulation portion 410 is longer than the depth of the receiving portion 110, so that the manipulation portion 410 is supported by the inner wall edge of the receiving portion 110 in contact with the manipulation portion 410, and a force may be applied in the direction of compressing the deformation portion 420 by the principle of a lever.

The manipulation portion 410 may be formed of a rigid material so that its shape is not deformed even when a force is applied and the force may be applied to the deformation portion 420, and may be formed of, for example, plastic, metal, or the like, but is not limited thereto. The manipulation portion 410 may be formed to have stronger rigidity than the deformation portion 420.

The deformation portion 420 is deformed in shape in the insert groove 310 according to the manipulation of the manipulation portion 410, which may be configured to separate the secondary battery 300 from the receiving portion 110.

The deformation portion 420 is formed to extend from the manipulation portion 410, and may be disposed along the length direction or width direction of the secondary battery 300.

The deformation portion 420 may be disposed to be inserted into the insert groove 310. The insert groove 310 is formed in the secondary battery 300, and thus, even if the secondary battery 300 is accommodated in the receiving portion 110 after inserting the deformation portion 420 into the insert groove 310, it is possible to prevent a problem in which the secondary battery 300 is damaged by the thickness of the deformation portion 420.

The deformation portion 420 is subjected to a compressive force along the length direction according to the manipulation of the manipulation portion 410, and at least a portion of the deformation portion 420 subjected to the force is convexly deformed toward the secondary battery 300 and may push the secondary battery 300 outward from the receiving portion 110 to separate the secondary battery 300 from the receiving portion 110.

The deformation portion 420 may include an elastically deformable material so as to be elastically deformed according to the manipulation of the manipulation portion 410. It may be, but is not limited to, for example, plastic, metal, or the like.

The manipulation portion 410 may be formed to have stronger rigidity than the deformation portion 420 so that the shape thereof is not deformed according to the user's manipulation and a full force may be applied to the deformation portion 420.

The deformation portion 420 may include a bonded portion 421 and a non-bonded portion 422.

The bonded portion 421 is formed at an end of the deformation portion 420, and may be configured to be bonded to one surface of the secondary battery 300. The position of the bonded portion 421 on one surface of the secondary battery 300 is fixed, so that when the deformation portion 420 is deformed by manipulation of the manipulation portion 410, the deformation portion 420 may be induced to be deformed into a convex shape toward the secondary battery 300. More specifically, the bonded portion 421 may be bonded to one surface of the insert groove 310 of the secondary battery 300.

The bonded portion 421 may be formed, for example, at an end of the insert groove 310, but is not limited thereto.

The non-bonded portion 422 is an area that is not bonded to the secondary battery 300 in the deformed portion 420, and may be formed to extend from the bonded portion 421 along the insert groove 310.

The non-bonded portion 422 is disposed between the bonded portion 421 and the manipulation portion 410, and if the deformation portion 420 is subjected to a compressive force according to the manipulation of the manipulation portion 410, the end of the non-bonded portion 422 is fixed to the secondary battery 300 by the bonded portion 421, and thus the non-bonded portion 422 may be deformed by convexly bending toward the secondary battery 300. The non-bonded portion 422 having a deformed shape may push the secondary battery 300 outward from the receiving portion 110 to separate the secondary battery 300 from the receiving portion 110.

Additionally, since the non-bonded portion 422 is formed of an elastically deformable material, the non-bonded portion 422 may cushion any impact that the secondary battery 300 may receive when pushing the secondary battery 300 out, thereby minimizing damage to the secondary battery 300.

The non-bonded portion 422 is disposed between the secondary battery 300 and the bottom surface of the receiving portion 110, and may push the lower surface of the secondary battery 300 in contact with the non-bonded portion 422 out toward the outside of the receiving portion 110, thereby preventing the secondary battery 300 from being warped or bent and damaging to the electrode assembly accommodated therein when the secondary battery 300 is separated from the receiving portion 110.

### Embodiment 2

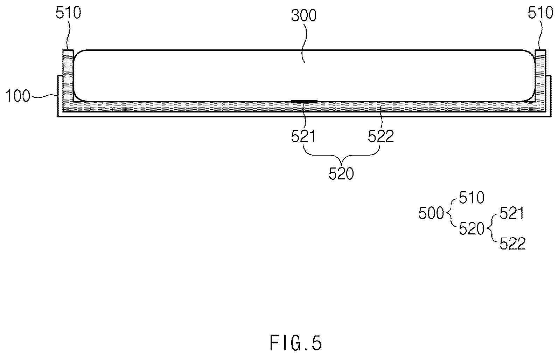

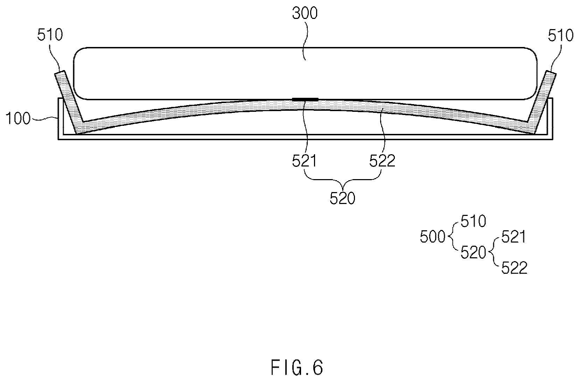

Referring to FIGS. 5 and 6, as Embodiment 2 according to the present disclosure, the electronic device may include a body portion 100, a cover, a secondary battery 300, and an insert unit 500.

Descriptions of the body portion 100, the cover, and the secondary battery 300 are the same as those described above, and thus may be replaced.

The insert unit 500 may include a manipulation portion 510 and a deformation portion 520.

The insert unit 500 may include a bent shape. The manipulation portions 510 are formed at both ends of the deformation portion 520 and may be formed to be bent at a predetermined angle with respect to the deformation portion 520. Since the manipulation portions 510 are formed to be bent at a predetermined angle with respect to the deformation portion 520, one ends of the manipulation portions 510 are manipulated to move away from the secondary battery 300, so that the other ends of the manipulation portions 510 connected to the deformation portion 520 may apply force in a direction of compressing the deformation portion 520, and the deformation portion 520 subjected to the force may be deformed in shape by the manipulation portions 510.

The manipulation portions 510 may be formed to be symmetrical to both ends of the deformation portion 520.

The manipulation portion 510 may be formed to extend from the deformation portion 520 along the thickness direction of the secondary battery 300 on both sides of the secondary battery 300. Since the length of the manipulation portions 510 is formed to be longer than the depth of the receiving portion 110, the manipulation portion 510 may be formed to protrude from the receiving portion 110. The manipulation portions 510 protruding from the receiving portion 110 may be respectively gripped and manipulated by a user.

The manipulation portions 510 may be formed of a rigid material so that their shapes are not deformed even when the user grips and manipulates them. The manipulation portions 510 may contact the inner wall edge of the receiving portion 110 when the user manipulates one ends thereof to move away from the secondary battery 300, and the length of the manipulation portions 510 is longer than the depth of the receiving portion 110, so that the manipulation portions 510 are supported by the inner wall edge of the receiving portion 110 in contact with the manipulation portions 510, and a force may be applied in the direction of compressing the deformation portion 520 by the principle of a lever.

The manipulation portion 510 may be formed of a rigid material so that its shape is not deformed even when a force is applied and the force may be applied to the deformation portion 520, and may be formed of, for example, plastic, metal, or the like, but is not limited thereto. The manipulation portion 510 may be formed to have stronger rigidity than the deformation portion 520.

The deformation portion 520 is deformed in shape according to the manipulation of the manipulation portion 510, which may be configured to separate the secondary battery 300 from the receiving portion 110.

The deformation portion 520 is formed to extend from the manipulation portion 510, and may be disposed along the length direction or width direction of the secondary battery 300.

The deformation portion 520 may be disposed to be inserted into the insert groove 310. The insert groove 310 is formed in the secondary battery 300, and thus, even if the secondary battery 300 is accommodated in the receiving portion 110 after inserting the deformation portion 520 into the insert groove 310, it is possible to prevent a problem in which the secondary battery 300 is damaged by the thickness of the deformation portion 520.

The deformation portion 520 is subjected to a compressive force along the length direction according to the manipulation of the manipulation portions 510 formed on both sides of the deformation portion 520, and at least a portion of the deformation portion 520 subjected to the force is convexly deformed toward the secondary battery 300 and may push the secondary battery 300 outward from the receiving portion 110 to separate the secondary battery 300 from the receiving portion 110.

The deformation portion 520 may include an elastically deformable material so as to be elastically deformed according to the manipulation of the manipulation portion 510. It may be, but is not limited to, for example, plastic, metal, or the like.

The manipulation portion 510 may be formed to have stronger rigidity than the deformation portion 520 so that the shape thereof is not deformed according to the user's manipulation and a full force may be applied to the deformation portion 520.

The deformation portion 520 may include a bonded portion 521 and a non-bonded portion 522.

The bonded portion 521 is formed near the center of the deformation portion 520 in the length direction, and may be configured to be bonded to one surface of the secondary battery 300. The position of the bonded portion 521 on one surface of the secondary battery 300 is fixed, so that when the deformation portion 520 is deformed by manipulation of the manipulation portion 510, the deformation portion 520 may be induced to be deformed into a convex shape toward the secondary battery 300. More specifically, the bonded portion 521 may be bonded to the center of the insert groove 310 of the secondary battery 300 in the length direction.

The bonded portion 521 may be formed, for example, at the center of the insert groove 310, but is not limited thereto.

When the shape of the deformation portion 520 is deformed, the bonded portion 521 may push the secondary battery 300 out from the receiving portion together with the non-bonded portion 522.

The non-bonded portion 522 is an area that is not bonded to the secondary battery 300 in the deformation portion 520, and may be formed to extend from the bonded portion 521 located near the center of the deformation portion 520 along the insert groove 310 in both directions.

The non-bonded portion 522 is disposed between the bonded portion 521 and the manipulation portion 510, and if the deformation portion 520 is subjected to a compressive force according to the manipulation of the manipulation portion 510, the end of the non-bonded portion 522 is fixed to the secondary battery 300 by the bonded portion 521, and thus the non-bonded portion 522 may be deformed by convexly bending toward the secondary battery 300. The non-bonded portion 522 having a deformed shape, together with the bonded portion 521, may push the secondary battery 300 outward from the receiving portion 110 to separate the secondary battery 300 from the receiving portion 110.

Since the non-bonded portion 522 is disposed between the secondary battery 300 and the bottom surface of the receiving portion 110, it pushes the secondary battery 300 from the bottom of the secondary battery 300 toward the outside of the receiving portion 110 in the event of deformation, and thus damage to the secondary battery 300 may be reduced compared to the case where a structure is installed in the gap between the end of the secondary battery 300 and the receiving portion 110 to separate the secondary battery 300 from the receiving portion 110. Additionally, the deformation portion 520 may be induced to be deformed symmetrically based on the bonded portion 521 by the manipulation portions 510 disposed symmetrically at both ends of the deformation portion 520, so that the secondary battery 300 may be separated from the receiving portion 110 while being subjected to a uniform force.

The deformation portion 520 is disposed between the secondary battery 300 and the bottom surface of the receiving portion 110, and may push the vicinity of the center of the lower surface of the secondary battery 300 toward the outside of the receiving portion 110, thereby preventing the secondary battery 300 from being warped or bent and damaging to the electrode assembly accommodated therein when the secondary battery 300 is separated from the receiving portion 110.

### Embodiment 3

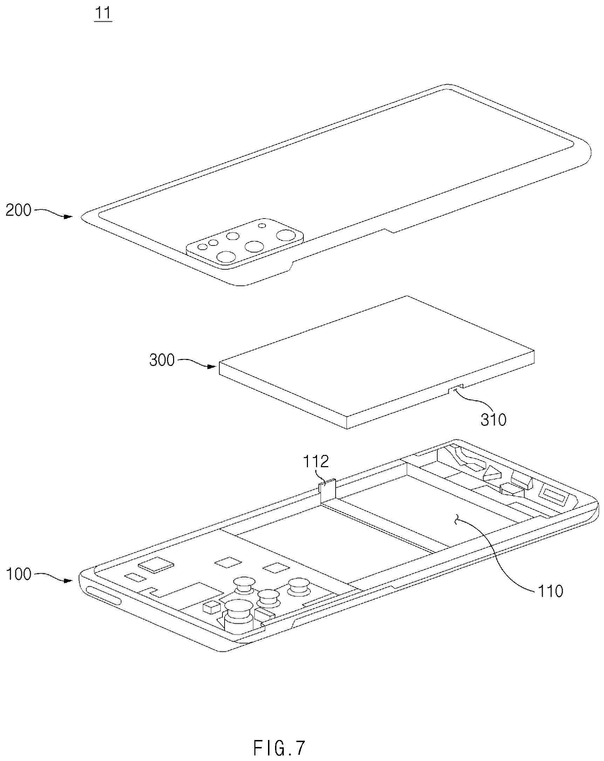

Referring to FIG. 7, as Embodiment 3 according to the present disclosure, the electronic device 11 may include a body portion 100, a secondary battery 300, and an insert unit 600.

Descriptions of the cover and the secondary battery 300 are the same as those described above, and thus may be replaced.

The body portion 100 may include electronic components required for the electronic device 11 to be electrically driven.

In the body portion 100, a receiving portion 110 having an indented shape may be formed to accommodate the secondary battery 300, which is the energy source for driving the electronic components.

The insert unit 600 is configured to separate the secondary battery 300 inserted into the receiving portion 110 of the body portion 100 from the receiving portion 110, which may be configured to prevent damage when the secondary battery 300 is separated from the receiving portion 110.

The insert unit 600 is mounted on the receiving portion 110, and may be provided to separate the secondary battery 300 from the receiving portion 110 as it is deformed.

The insert unit 600 may include a manipulation portion 610 and a deformation portion 620.

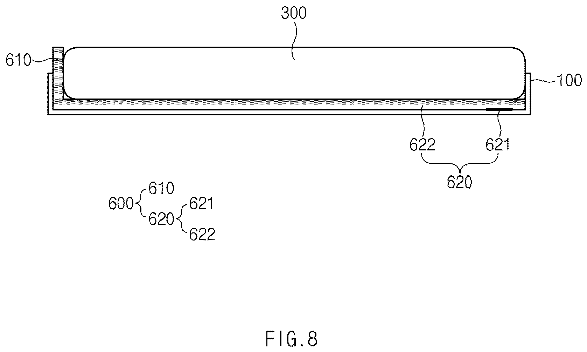

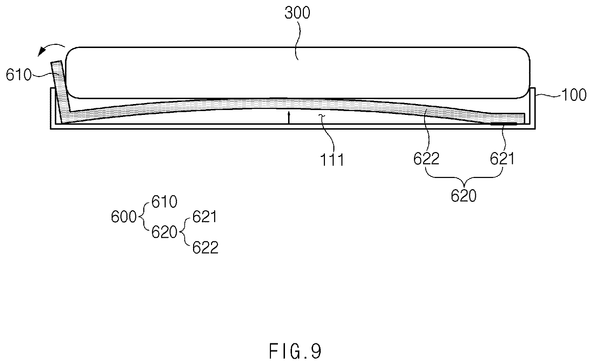

Referring to FIGS. 8 and 9, the insert unit 600 may include a bent shape. The manipulation portion 610 may be formed to be bent at a predetermined angle with respect to the deformation portion 620 at an end of the deformation portion 620. Since the manipulation portion 610 is formed to be bent at a predetermined angle with respect to the deformation portion 620, one end of the manipulation portion 610 is manipulated to move away from the secondary battery 300, so that the other end of the manipulation portion 610 connected to the deformation portion 620 may apply a force in a direction of compressing the deformation portion 620, and the deformation portion 620 subjected to the force may be deformed in shape by the manipulation portion 610.

The manipulation portion 610 may be formed to extend from the deformation portion 620 along the thickness direction of the secondary battery 300 on one side of the secondary battery 300. Since the length of the manipulation portion 610 is formed to be longer than the depth of the receiving portion 110, the manipulation portion 610 may be formed to protrude from the receiving portion 110. The manipulation portion 610 protruding from the receiving portion 110 may be gripped and manipulated by a user.

The manipulation portion 610 may be formed of a rigid material so that its shape is not deformed even when the user grips and manipulates it. The manipulation portion 610 may contact the inner wall edge of the receiving portion 110 when the user manipulates one end thereof to move away from the secondary battery 300, and the length of the manipulation portion 610 is longer than the depth of the receiving portion 110, so that the manipulation portion 610 is supported by the inner wall edge of the receiving portion 110 in contact with the manipulation portion 610, and a force may be applied in the direction of compressing the deformation portion 620 by the principle of a lever.

The manipulation portion 610 may be formed of a rigid material so that its shape is not deformed even when a force is applied and the force may be applied to the deformation portion 620, and may be formed of, for example, plastic, metal, or the like, but is not limited thereto. The manipulation portion 610 may be formed to have stronger rigidity than the deformation unit 620.

The deformation portion 620 is deformed in shape in the insert groove 310 according to the manipulation of the manipulation portion 610, which may be configured to separate the secondary battery 300 from the receiving portion 110.

The deformation portion 620 is formed to extend from the manipulation portion 610, and may be disposed along the length direction or width direction of the secondary battery 300.

The deformation portion 620 may be disposed to be inserted into the insert groove 310. The insert groove 310 is formed in the secondary battery 300, and thus, even if the secondary battery 300 is accommodated in the receiving portion 110 after inserting the deformation portion 620 into the insert groove 310, it is possible to prevent a problem in which the secondary battery 300 is damaged by the thickness of the deformation portion 620.

The deformation portion 620 is subjected to a compressive force along the length direction according to the manipulation of the manipulation portion 610, and at least a portion of the deformation portion 620 subjected to the force is convexly deformed toward the secondary battery 300 and may push the secondary battery 300 outward from the receiving portion 110 to separate the secondary battery 300 from the receiving portion 110.

The deformation portion 620 may include an elastically deformable material so as to be elastically deformed according to the manipulation of the manipulation portion 610. It may be, but is not limited to, for example, plastic, metal, or the like.

The manipulation portion 610 may be formed to have stronger rigidity than the deformation portion 620 so that the shape thereof is not deformed according to the user's manipulation and a full force may be applied to the deformation portion 620.

The deformation portion 620 may include a fixed portion 621 and a non-fixed portion 622.

The fixed portion 621 is located at an end of the non-fixed portion 622, and may be configured to be fixed to one side of the receiving portion 110. The position of the fixed portion 621 on one surface of the secondary battery 300 is fixed, so that when the deformation portion 620 is deformed by manipulation of the manipulation portion 610, the deformation portion 620 may be induced to be deformed into a convex shape toward the secondary battery 300. More specifically, the fixed portion 621 may be bonded to one surface of the insert groove 310 of the secondary battery 300.

The fixed portion 621 may be formed, for example, at one end of the receiving portion 110, but is not limited thereto.

The non-fixed portion 622 is an area that is not fixed to the receiving portion 110, and may be formed to extend from the fixed portion 621 in one direction.

The non-fixed portion 622 is disposed between the fixed portion 621 and the manipulation portion 610, and if the deformation portion 620 is subjected to a compressive force according to the manipulation of the manipulation portion 610, the end of the deformation portion 620 is fixed to the receiving portion 110 by the fixed portion 621, and thus the non-fixed portion 622 may be deformed by convexly bending toward the secondary battery 300. The non-fixed portion 622 having a deformed shape may push the secondary battery 300 outward from the receiving portion 110 to separate the secondary battery 300 from the receiving portion 110.

Since the non-fixed portion 622 is disposed between the secondary battery 300 and the bottom surface of the receiving portion 110, it pushes the secondary battery 300 from the bottom of the secondary battery 300 toward the outside of the receiving portion 110 in the event of deformation, and thus damage to the secondary battery 300 may be reduced compared to the case where a structure is installed in the gap between the end of the secondary battery 300 and the receiving portion 110 to separate the secondary battery 300 from the receiving portion 110. Additionally, the deformation portion 620 is disposed between the secondary battery 300 and the bottom surface of the receiving portion 110, and may push the vicinity of the center of the lower surface of the secondary battery 300 toward the outside of the receiving portion 110, thereby preventing the secondary battery 300 from being warped or bent and damaging to the electrode assembly accommodated therein when the secondary battery 300 is separated from the receiving portion 110.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

## Claims

1. An electronic device comprising:
a body portion in which a receiving portion having an indented shape is formed;
a secondary battery accommodated in the receiving portion; and
an insert unit that is at least partially bonded to the secondary battery and is provided to separate the secondary battery from the receiving portion as it is deformed,
wherein the insert unit comprises:
a manipulation portion; and
a deformation portion connected to the manipulation portion and provided to be deformed by manipulation of the manipulation portion.

2. The electronic device according to claim 1,
wherein the manipulation portion is formed to be bent at a predetermined angle with respect to the deformation portion at an end of the deformation portion, and extends along the thickness direction of the secondary battery on one side of the secondary battery.

3. The electronic device according to claim 2,
wherein one end of the manipulation portion is manipulated to move away from the secondary battery, so that the other end thereof connected to the deformation portion is provided to apply a force in a direction of compressing the deformation portion.

4. The electronic device according to claim 3,
wherein the deformation portion comprises:
a bonded portion bonded to one surface of the secondary battery; and
a non-bonded portion that extends from the bonded portion and is not bonded to the secondary battery,
wherein the non-bonded portion is deformed in shape by manipulation of the manipulation portion and is provided to push the secondary battery out.

5. The electronic device according to claim 4,
wherein the non-bonded portion is deformed into a convex shape toward the secondary battery by manipulation of the manipulation portion and is provided to push the secondary battery out.

6. The electronic device according to claim 4,
wherein the manipulation portion has stronger rigidity than the deformation portion.

7. The electronic device according to claim 6,
wherein the deformation portion comprises an elastically deformable material.

8. The electronic device according to claim 2,
wherein the deformation portion is formed to extend from the manipulation portion, and is disposed along the length direction or width direction of the secondary battery.

9. The electronic device according to claim 1,
wherein an insert groove is formed in one direction on one surface of the secondary battery, and
the deformation portion is inserted into the insert groove.

10. The electronic device according to claim 1,
wherein the secondary battery comprises:
a first electrode assembly formed in a first area and having at least one of a first positive electrode, a first negative electrode, and a first separator stacked;
a second electrode assembly stacked on the first electrode assembly in a second area smaller than the first area so that an insert groove is formed, and having at least one of a second positive electrode, a second negative electrode, and a second separator stacked; and
a case accommodating the first electrode assembly and the second electrode assembly.

11. The electronic device according to claim 10,
wherein the secondary battery further comprises:
a third electrode assembly disposed being spaced apart from the second electrode assembly by a predetermined distance on the first electrode assembly so that the insert groove is formed, stacked in a third area smaller than the first area, and having at least one of a third positive electrode, a third negative electrode, and a third separator stacked.

12. An electronic device comprising:
a secondary battery;
a body portion in which a receiving portion having an indented shape is formed to accommodate the secondary battery; and
an insert unit mounted on the receiving portion and provided to separate the secondary battery from the receiving portion as it is deformed,
wherein the insert unit comprises:
a manipulation portion; and
a deformation portion connected to the manipulation portion and provided to be deformed according to manipulation of the manipulation portion.

13. The electronic device according to claim 12,
wherein the deformation portion comprises:
a fixed portion fixed to one side of the receiving portion; and
a non-fixed portion that is deformed according to manipulation of the manipulation portion and is provided to push the secondary battery out from the receiving portion.

14. The electronic device according to claim 13,
wherein the non-fixed portion is deformed into a convex shape toward the secondary battery by manipulation of the manipulation portion and is provided to push the secondary battery out.

15. The electronic device according to claim 13,
wherein the manipulation portion is formed to be bent at a predetermined angle with respect to the non-fixed portion from an end of the non-fixed portion, and extends along the depth direction of the receiving portion.
